# FASCICULE DE BREVET EUROPEEN

(11) **EP 4 119 767 B1**
(45) Date de publication et mention de la délivrance du brevet: **06.03.2024**
(21) Numéro de dépôt: 22184207.3
(22) Date de dépôt: 11.07.2022
(51) Int. Cl.: E21B 41/00, E21B 43/16

(54) **PROCÉDÉ DE RÉGULATION D'UNE INSTALLATION POUR LA SÉQUESTRATION GÉOLOGIQUE DE DIOXYDE DE CARBONE, ADAPTÉE À UNE ALIMENTATION PAR ÉNERGIE RENOUVELABLE**
VERFAHREN ZUR REGULIERUNG EINER ANLAGE FÜR DIE GEOLOGISCHE ABSCHEIDUNG VON KOHLENDIOXID, DIE FÜR EINE VERSORGUNG MIT ERNEUERBARER ENERGIE GEEIGNET IST
METHOD FOR CONTROLLING A FACILITY FOR GEOLOGICAL SEQUESTRATION OF CARBON DIOXIDE, ADAPTED TO A POWER SUPPLY BY RENEWABLE ENERGY

(30) Priorité: 12.07.2021 FR 2107559
(43) Date de publication de la demande: 18.01.2023
(73) Titulaire: Technip Energies France, 92741 Nanterre Cedex (FR)
(72) Inventeur: LOPEZ, Audrey, 92400 COURBEVOIE (FR); PERDU, Gauthier, 92400 COURBEVOIE (FR); Heme de Lacotte, Luc, 92741 NANTERRE CEDEX (FR); DECHIRON, Cyrille, 92400 COURBEVOIE (FR); MARCEL, Fabrice, 92400 COURBEVOIE (FR)
(74) Mandataire: McWilliams, David John

(56) Documents cités:
- WO-A2-2008/076947
- US-A- 5 214 384
- US-A1- 2007 261 844
- US-A1- 2015 013 977
- US-A1- 2017 283 014

## Description

La présente invention concerne un procédé de régulation d'une installation pour la séquestration géologique de dioxyde de carbone, du type comportant : une structure préférentiellement flottante ; un compartiment de stockage de dioxyde de carbone à l'état liquide, reçu dans ladite structure ; un dispositif d'injection, apte à injecter du dioxyde de carbone dans un réservoir géologique sous-marin, depuis ledit compartiment de stockage ; un organe de production d'énergie, apte à alimenter ledit dispositif d'injection ; et un organe de stockage d'énergie reçu dans ladite structure, ledit organe de stockage étant également apte à alimenter le dispositif d'injection.

L'invention s'applique particulièrement aux installations off-shore, telles que décrites dans le document US2017/0283014. Ces installations sont destinées à l'injection de dioxyde de carbone (CO₂) dans des réservoirs géologiques subaquatiques, à des fins de séquestration.

La séquestration du dioxyde de carbone a pour but de diminuer les émissions de gaz à effet de serre dans l'atmosphère. Il est donc préférable d'alimenter de telles installations en une énergie non émettrice de gaz à effet de serre, provenant de sources renouvelables, telle que l'énergie éolienne, l'énergie solaire, l'énergie maréthermique, l'énergie marémotrice ou l'énergie provenant de la géothermie.

La production d'énergie renouvelable présente l'inconvénient d'être intermittente, notamment en fonction des conditions climatiques. Or, selon les conditions de mise en oeuvre, l'utilisation d'un réservoir géologique implique des risques de formation d'hydrates dans les canaux de diffusion dudit réservoir, et/ou l'obturation desdits canaux. Afin de diminuer de tels risques et de simplifier les différents aspects opérationnels en évitant des arrêts/redémarrages fréquents, il est préférable d'assurer une injection continue de dioxyde de carbone dans le réservoir.

La présente invention a pour but de proposer une mise en oeuvre d'une installation pour la séquestration géologique de dioxyde de carbone, adaptée à un fonctionnement basé sur des énergies renouvelables tout en assurant une injection en continu avec un débit potentiellement modulable en fonction de l'énergie disponible.

A cet effet, l'invention a pour objet un procédé de régulation du type précité, dans lequel : l'organe de production d'énergie fournit une puissance variable dans le temps, ladite puissance fournie étant associée à un premier et à un deuxième seuils de puissance définis, le deuxième seuil étant supérieur ou égal au premier seuil ; la puissance fournie variant entre un premier état faible, inférieur au premier seuil ; un deuxième état intermédiaire, compris entre les premier et deuxième seuils ; et un troisième état élevé, supérieur au deuxième seuil ; et lorsque la puissance fournie est dans le premier état faible, le dispositif d'injection est alimenté par l'organe de stockage d'énergie ; et lorsque ladite puissance fournie est dans le troisième état élevé, le dispositif d'injection est alimenté par l'organe de production d'énergie et ledit organe de production d'énergie alimente en parallèle l'organe de stockage d'énergie ; de sorte à assurer une injection continue de dioxyde de carbone dans le réservoir géologique sous-marin depuis le compartiment de stockage de dioxyde de carbone.

Suivant d'autres aspects avantageux de l'invention, le procédé de régulation comporte l'une ou plusieurs des caractéristiques suivantes, prises isolément ou suivant toutes les combinaisons techniquement possibles :
- lorsque le dispositif d'injection est alimenté par l'organe de stockage d'énergie, l'injection de dioxyde de carbone depuis le compartiment de stockage est mise en oeuvre avec un premier débit ; et lorsque le dispositif d'injection est alimenté par l'organe de production d'énergie, ladite injection de dioxyde de carbone est mise en oeuvre avec un deuxième débit supérieur au premier débit ;
- l'installation comporte un outil de prévision de la puissance fournie par l'organe de production de l'énergie renouvelable ; et lorsque ladite puissance fournie est dans le deuxième état intermédiaire, l'injection de dioxyde de carbone depuis le compartiment de stockage est mise en oeuvre avec un troisième débit variable au cours du temps entre les premier et deuxième débits, en fonction de prévisions de l'outil.

L'invention se rapporte en outre à une installation pour la séquestration géologique de dioxyde de carbone, ladite installation comprenant : une structure ; un compartiment de stockage de dioxyde de carbone à l'état liquide, reçu dans ladite structure ; un dispositif d'injection, apte à injecter du dioxyde de carbone dans un réservoir géologique sous-marin, depuis ledit compartiment de stockage ; un organe de production d'énergie, apte à alimenter ledit dispositif d'injection ; et un organe de stockage d'énergie reçu dans ladite structure, ledit organe de stockage étant également apte à alimenter le dispositif d'injection ; l'installation étant munie de moyens de mise en oeuvre d'un procédé de gestion tel que décrit ci-dessus, de sorte à assurer une injection continue de dioxyde de carbone dans le réservoir géologique sous-marin depuis le compartiment de stockage.

Suivant d'autres aspects avantageux de l'invention, l'installation comporte l'une ou plusieurs des caractéristiques suivantes, prises isolément ou suivant toutes les combinaisons techniquement possibles :
- l'organe de stockage d'énergie comprend un dispositif de stockage d'énergie hydraulique ;
- l'organe de stockage d'énergie comprend un dispositif de stockage de dioxyde de carbone sous pression ;
- l'organe de stockage d'énergie comprend une batterie de stockage électrique ;
- l'organe de production d'énergie est reçu sur la structure ;
- l'organe de production d'énergie est externe à la structure ;
- l'organe de production d'énergie est alimenté par une source d'énergie renouvelable, préférentiellement choisie parmi l'énergie éolienne, l'énergie solaire, l'énergie maréthermique, l'énergie marémotrice et l'énergie provenant de la géothermie.

L'invention sera mieux comprise à la lecture de la description qui va suivre, donnée uniquement à titre d'exemple non limitatif et faite en se référant aux dessins sur lesquels :

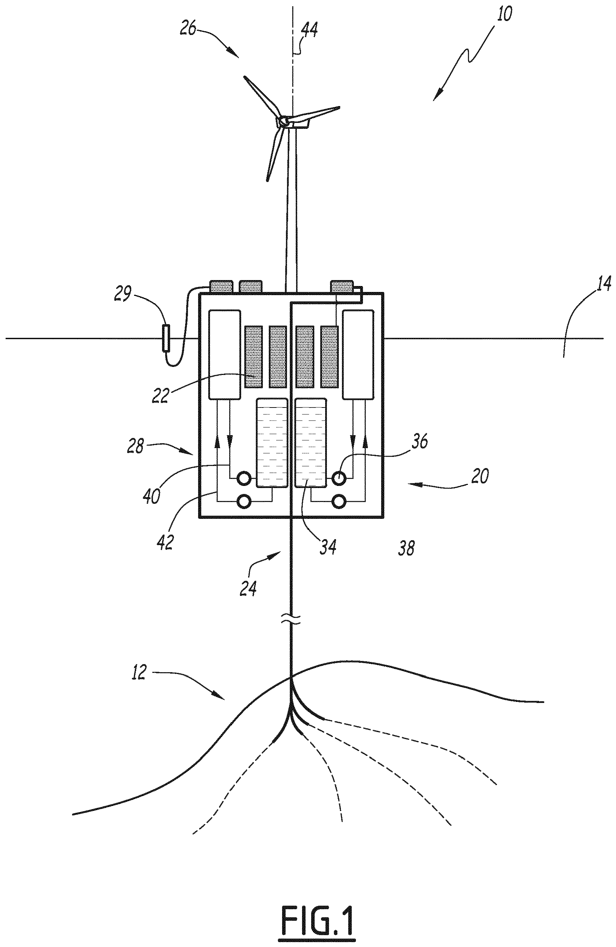

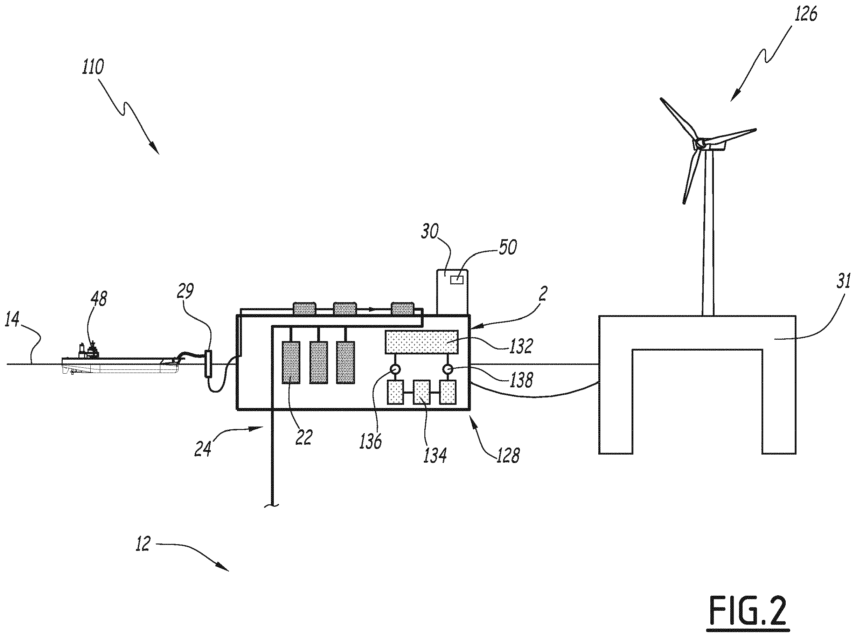

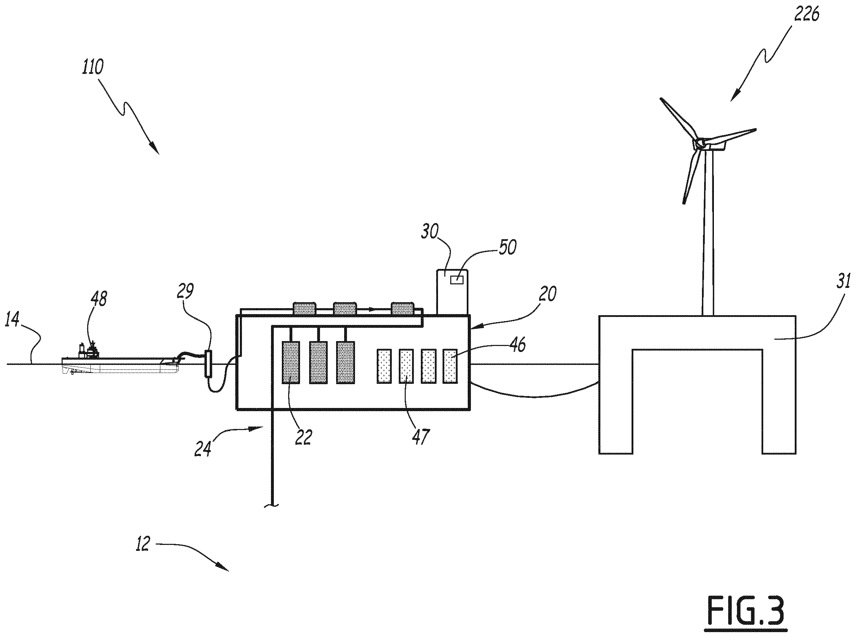

[Fig 1] [Fig 2] [Fig 3] les figures 1, 2 et 3 sont des représentations schématiques d'installations pour la séquestration géologique de dioxyde de carbone, selon respectivement un premier, un deuxième et un troisième modes de réalisation de l'invention.

Chacune des figures 1, 2 et 3 représente une installation 10, 110, 210 pour la séquestration géologique de dioxyde de carbone, selon respectivement un premier, un deuxième et un troisième modes de réalisation de l'invention.

Plus précisément, chacune des installations 10, 110, 210 est apte à injecter du dioxyde de carbone dans un réservoir géologique 12 sous-marin, visible sur la figure 1. Par « sous-marin », on entend que le réservoir géologique 12 est situé dans un sol recouvert par la mer 14 ou, en variante, par une étendue d'eau douce telle qu'un lac.

Les installations 10, 110 et 210 seront décrites simultanément ci-après, les éléments communs étant désignés par les mêmes numéros de référence.

L'installation 10, 110, 210 comprend : une structure 20, flottante sur ou immergée dans une étendue d'eau ; un compartiment 22 de stockage de dioxyde de carbone ; un dispositif 24 d'injection ; un organe 26, 126, 226 de production d'énergie ; un organe 28, 128, 228 de stockage d'énergie ; et un dispositif 29 de connexion et de déchargement de CO₂ liquide.

L'installation 10, 110, 210 comprend un module électronique 30 de régulation, visible sur les figures 2 et 3.

Dans les modes de réalisation représentés, la structure 20 est notamment destinée à être installée flottante sur l'étendue d'eau, telle que la mer 14, recouvrant le réservoir géologique 12. La structure 20 peut être flottante comme par exemple de type « Single Point Anchor Réservoir » (SPAR), ou une plate-forme semi-submersible ou une coque de navire. En variante non représentée, la structure 20 peut être directement posée sur le fond d'une étendue d'eau comme par exemple une « Gravity Base Structure » (GBS) ou une structure treillis « jack-up » En variante, la structure 20 flottante est un transporteur de CO₂ liquide.

Le compartiment 22 est reçu dans la structure 20. Le compartiment 22 est apte à stocker du dioxyde de carbone à l'état liquide. Dans les modes de réalisation représentés, l'installation 10, 110, 210 comprend plusieurs compartiments 22 reçus dans la structure 20.

Le dispositif d'injection 24 est reçu dans la structure 20. Le dispositif d'injection 24 est apte à injecter du dioxyde de carbone dans le réservoir géologique 12 sous-marin, depuis le ou les compartiments 22 de stockage.

En particulier, le dispositif d'injection 24 est muni de moyens pour : prélever du CO₂ à l'état liquide dans le ou les compartiments 22 de stockage ; conditionner ledit CO₂, notamment sa température et sa pression, jusqu'à un état souhaité ; et envoyer ledit CO₂ conditionné dans le réservoir géologique 12.

Comme il sera détaillé par la suite, l'installation 10, 110, 210 est configurée de sorte que le dispositif d'injection 24 effectue une injection continue de dioxyde de carbone dans le réservoir géologique 12 depuis le compartiment 22 de stockage. Par « injection continue », on entend que le débit d'injection du dispositif d'injection 24 vers le réservoir géologique 12 est en permanence strictement supérieur à zéro.

L'organe 26, 126, 226 de production d'énergie est apte à alimenter en énergie le dispositif d'injection 24.

Dans le premier mode de réalisation, l'organe 26 de production d'énergie de l'installation 10 est situé sur la structure 20. Dans les deuxième et troisième modes de réalisation, l'organe 126, 226 de production d'énergie de l'installation 110, 210 est situé sur une structure annexe 31, distincte de la structure 20. En variante aux deuxième et troisième modes de réalisation, l'organe de production d'énergie de l'installation est situé sur la structure.

De préférence, l'organe 26, 126, 226 de production d'énergie est alimenté par une source d'énergie renouvelable. Dans les modes de réalisation représentés, l'organe 26, 126, 226 de production d'énergie est une éolienne, apte à produire de l'énergie à partir du vent. En variante, la source d'énergie renouvelable est l'énergie solaire ou l'énergie maréthermique ou l'énergie marémotrice ou l'énergie provenant de la géothermie.

L'organe 28, 128, 228 de stockage d'énergie est reçu dans la structure flottante 20.

L'organe 28, 128, 228 de stockage d'énergie est apte à alimenter en énergie le dispositif d'injection 24. Par ailleurs, l'organe 28, 128, 228 de stockage d'énergie est apte à être alimenté en énergie par l'organe 26, 126, 226 de production d'énergie.

Dans le premier mode de réalisation, l'organe 28 de stockage d'énergie est basé sur l'énergie accumulée par une différence de gravité entre deux réservoirs situés à une hauteur différente. Le transfert permet la restitution par transformation de l'énergie potentielle gravitaire et de production d'énergie hydraulique. Plus précisément, l'organe 28 comporte : un premier 32 et un deuxième 34 réservoirs, une turbine 36 hydraulique et une pompe 38.

Le premier réservoir 32 est verticalement situé plus haut que le deuxième réservoir 34 dans la structure flottante 20. Les premier 32 et deuxième 34 réservoirs sont en communication hydraulique via un premier 40 et un deuxième 42 circuits. La turbine hydraulique 36 et la pompe 38 sont respectivement situés sur le premier 40 et sur le deuxième 42 circuits.

Les premier 32 et deuxième 34 réservoirs et les premier 40 et deuxième 42 circuits sont aptes à recevoir un fluide, de préférence un liquide, tel que de l'eau.

La turbine hydraulique 36 est apte à fournir de l'énergie au dispositif d'injection 24. La pompe 38 est apte à recevoir de l'énergie de l'organe 26 de production.

Dans le mode de réalisation représenté à la figure 1, l'organe 28 comporte plusieurs sous-ensembles, chacun desdits sous-ensembles comprenant un premier 32 et un deuxième 34 réservoirs, une turbine 36 hydraulique et une pompe 38 tels que décrits ci-dessus. Les sous-ensembles sont répartis angulairement autour d'un axe principal vertical 44 de la structure flottante 20, de sorte que les transferts hydrauliques ne perturbent pas un équilibre de ladite structure.

Dans le deuxième mode de réalisation, l'organe 128 de stockage d'énergie est basé sur l'énergie d'un fluide stocké sous haute pression. Plus précisément, l'organe 128 comporte : un troisième 132 et un quatrième 134 réservoirs incluant une ou plusieurs unités de stockage, un système de turbines 136 et un système de compresseurs 138.

Le troisième réservoir 132 est apte à stocker du dioxyde de carbone à pression élevée. Dans un mode de réalisation de l'invention, le CO₂ est dans des conditions de température et pression qui définissent un état de fluide supercritique. Le quatrième réservoir 134 est apte à stocker du dioxyde de carbone liquide a pression réduite.

Les troisième 132 et quatrième 134 réservoirs sont en communication fluidique via un cycle fermé. Le système de turbines 136 et le système de compresseurs 138 sont situés sur le cycle fermé.

Le système de turbines 136 est apte à fournir de l'énergie au dispositif d'injection 24 par abaissement de la pression du CO2 prélevé dans le réservoir 134, et délivrant un travail thermodynamique avec une efficacité élevée. Le système de compresseurs 138 est apte à recevoir de l'énergie de l'organe 126 de production pour stocker l'énergie dans le réservoir 132. La compression et la détente du CO₂ modifient la température, et chacun des cycles est équipé de dispositifs d'échanges de chaleur permettant le maintien de la température.

Dans le troisième mode de réalisation, l'organe 228 de stockage d'énergie est formé d'une batterie 46 électrique ou d'un ensemble de batteries 46 électriques. La ou les batteries 46 sont aptes à fournir de l'énergie au dispositif d'injection 24 et aptes à recevoir de l'énergie de l'organe 226 de production.

De manière optionnelle, l'organe 28, 128, 228 de stockage d'énergie comporte en outre un élément d'appoint, tel qu'une batterie d'appoint 47 représentée sur la figure 3. L'élément d'appoint est destiné à stocker de l'énergie provenant d'une autre source que l'organe 26, 126, 226 de production.

L'organe 29 d'accouplement est apte à s'assembler à un navire 48 transporteur de CO₂, représenté sur les figures 2 et 3, afin de réceptionner du dioxyde de carbone sur la structure flottante 20.

Dans les modes de réalisation représentés, le module électronique 30 de régulation est reçu dans la structure flottante 20. En variante non représentée, le module électronique 30 est situé dans un centre de contrôle extérieur à la structure flottante 20.

Le module électronique 30 est muni de moyens, tels qu'un programme informatique, pour la mise en oeuvre d'un procédé de régulation de l'installation 10, 110, 210. Ledit procédé a pour objet de maintenir une injection continue de dioxyde de carbone dans le réservoir géologique 12 depuis le compartiment 22 de stockage.

Le procédé de régulation tient compte de l'aspect variable dans le temps de la puissance fournie par l'organe 26, 126, 226 de production d'énergie, basé sur une source d'énergie renouvelable. En particulier, le module électronique 30 est apte à mesurer au cours du temps la puissance P fournie par l'organe 26, 126, 226 de production d'énergie.

Selon le procédé de régulation, la puissance P fournie est associée à un premier P1 et à un deuxième P2 seuils de puissance définis. Le deuxième seuil est supérieur ou égal au premier seuil.

De préférence, le deuxième seuil P2 de puissance est strictement supérieur au premier seuil P1. En variante, les premiers et deuxième seuils sont égaux, c'est-à-dire qu'il n'y a qu'un seuil de puissance défini. Dans la suite de la description, on considère que le deuxième seuil P2 est strictement supérieur au premier seuil P1.

Selon le procédé de régulation, la puissance P fournie par l'organe 26, 126, 226 de production varie au cours du temps entre un premier état faible, inférieur au premier seuil P1 ; un deuxième état intermédiaire, compris entre les premier P1 et deuxième P2 seuils ; et un troisième état élevé, supérieur au deuxième seuil.

Par exemple, dans le cas où l'organe 26, 126, 226 de production est une éolienne, le premier état faible correspond à un vent faible ou nul ; et le troisième état élevé correspond à un vent fort, permettant une bonne performance de ladite éolienne.

Selon un mode de réalisation, le premier état faible correspond en outre aux cas de vents trop forts pour permettre un fonctionnement sécurisé de l'éolienne, ladite éolienne étant alors à l'arrêt.

Lorsque la puissance P fournie par l'organe 26, 126, 226 de production est dans le premier état faible inférieur à P1, le dispositif d'injection 24 est alimenté par l'organe 28, 128, 228 de stockage d'énergie ; et l'injection de dioxyde de carbone depuis le compartiment de stockage 22 est mise en oeuvre avec un premier débit D1 non nul.

De préférence, D1 est choisi supérieur à une valeur minimale compatible avec les équipements d'injection tout en permettant d'assurer l'objectif de minimisation du nombre d'arrêts et de redémarrages de l'installation pour une taille de stockage d'énergie donnée.

Lorsque la puissance P fournie par l'organe 26, 126, 226 de production est dans le troisième état élevé supérieur à P2, le dispositif d'injection 24 est alimenté par ledit organe 26, 126, 226 de production d'énergie. L'injection de dioxyde de carbone depuis le compartiment de stockage 22 est alors mise en oeuvre avec un deuxième débit D2, supérieur au premier débit D1.

Ledit organe de production d'énergie alimente en parallèle l'organe 28, 128, 228 de stockage, jusqu'à ce que ledit organe de stockage atteigne une capacité maximale d'énergie stockée.

On considère à présent le cas où la puissance P fournie par l'organe 26, 126, 226 de production est dans le deuxième état intermédiaire, compris entre P1 et P2.

De préférence, le module électronique 30 est équipé de, ou associé à, un outil 50 (figure 2) de prévision de la variation de la puissance P fournie. Par exemple, l'outil 50 comporte un capteur ou un ensemble de capteurs météorologiques, ainsi qu'un logiciel permettant de prédire des conditions météorologiques futures en fonction des informations obtenues par le ou lesdits capteurs. Dans les modes de réalisation représentés, l'outil 50 de prévision permet d'anticiper les variations du vent à proximité de l'éolienne formant l'organe 26, 126, 226 de production.

De préférence, l'outil 50 de prévision est également apte à prévoir une quantité de CO₂ disponible à l'injection sur un laps de temps donné. Par exemple, l'outil 50 comporte un logiciel permettant de calculer ladite quantité en fonction d'informations liées à un état initial du stock de CO₂ et de quantités de livraisons prévues sur la structure 20. Une telle prévision permet notamment de diminuer le débit d'injection avant un éventuel épuisement du stock de CO₂ à injecter.

De préférence, le programme informatique du module électronique 30 est défini de sorte à partager la puissance P fournie par l'organe 26, 126, 226 de production dans le deuxième état intermédiaire, en fonction des prévisions de l'outil 50. Par exemple, ledit programme définit un débit D3, variable au cours du temps entre D1 et D2, en fonction desdites prévisions de l'outil 50. Ledit débit D3 mobilise une partie de la puissance P, le reste de ladite puissance étant utilisée pour le stockage d'énergie par l'organe 28, 128, 228 de stockage.

En variante, dans le deuxième état intermédiaire, le programme informatique du module électronique 30 définit le débit d'injection de dioxyde de carbone à une valeur D3 constante, comprise entre D1 et D2.

Selon un mode de réalisation, le programme informatique du module électronique 30 prévoit plusieurs des possibilités ci-dessus de gestion du deuxième état intermédiaire, un choix entre ces possibilités étant paramétrable par un opérateur au niveau du module électronique 30.

De préférence, le programme informatique du module électronique 30 réserve l'usage de la batterie d'appoint 47 à la gestion de situations extrêmes, lorsque le stockage d'énergie s'avère insuffisant ou inopérant, toujours dans le cadre de la recherche de la continuité d'injection.

Selon une variante non représentée aux modes de réalisation décrits ci-dessus, l'installation 10, 110, 210 comprend en outre au moins un ballon de pressurisation relié au compartiment 22 de stockage de dioxyde de carbone. Selon cette variante, lorsque la puissance P fournie est dans le deuxième ou dans le troisième état, du CO₂ est vaporisé depuis ledit compartiment 22 et mis sous pression dans ledit au moins un ballon de pressurisation.

On considère ensuite un cas dans lequel la puissance P fournie est dans le premier état faible et l'installation 10, 110, 210 dispose d'une énergie stockée insuffisante pour maintenir le premier débit D1.

Dans ce cas, selon une variante de l'invention, le dispositif d'injection 24 injecte le CO2 sous pression vers le réservoir géologique 12 depuis ledit ballon de pressurisation, grâce au principe du « free-flow ». Une telle variante permet de maintenir un débit d'injection réduit mais non nul, malgré l'épuisement de l'énergie disponible dans l'installation.

Ainsi, l'installation 10, 110, 210 assure une injection continue de CO₂, avec un débit variable, de préférence au-delà d'une valeur minimale permettant d'assurer l'objectif de minimisation du nombre d'arrêts et de redémarrages.

Une telle continuité de l'injection permet de maximiser les performances du réservoir géologique 12, tout en autorisant une alimentation en énergie renouvelable, de sorte à optimiser le bilan carbone de l'installation.

## Revendications

1. Procédé de régulation d'une installation (10, 110, 210) pour la séquestration géologique de dioxyde de carbone, ladite installation comprenant :
- une structure (20) préférentiellement flottante ;
- un compartiment (22) de stockage de dioxyde de carbone à l'état liquide, reçu dans ladite structure ;
- un dispositif d'injection (24), apte à injecter du dioxyde de carbone dans un réservoir géologique sous-marin (12), depuis ledit compartiment de stockage ;
- un organe (26, 126, 226) de production d'énergie, apte à alimenter ledit dispositif d'injection ; et
- un organe (28, 128, 228) de stockage d'énergie reçu dans ladite structure, ledit organe de stockage étant également apte à alimenter le dispositif d'injection ;
le procédé étant **caractérisé en ce que** :
- l'organe de production d'énergie fournit une puissance (P) variable dans le temps, ladite puissance fournie étant associée à un premier (P1) et à un deuxième (P2) seuils de puissance définis, le deuxième seuil étant supérieur ou égal au premier seuil ; la puissance fournie variant entre un premier état faible, inférieur au premier seuil (P1) ; un deuxième état intermédiaire, compris entre les premier et deuxième seuils ; et un troisième état élevé, supérieur au deuxième seuil (P2) ;
- lorsque la puissance fournie est dans le premier état faible, le dispositif d'injection (24) est alimenté par l'organe (28, 128, 228) de stockage d'énergie ; et lorsque ladite puissance fournie est dans le troisième état élevé, le dispositif d'injection est alimenté par l'organe (26, 126, 226) de production d'énergie et ledit organe de production d'énergie alimente en parallèle l'organe (28, 128, 228) de stockage ;
de sorte à assurer une injection continue de dioxyde de carbone dans le réservoir géologique sous-marin depuis le compartiment de stockage.

2. Procédé de régulation selon la revendication 1, dans lequel, lorsque le dispositif d'injection (24) est alimenté par l'organe (28, 128, 228) de stockage d'énergie, l'injection de dioxyde de carbone depuis le compartiment de stockage est mise en oeuvre avec un premier débit (D1) ; et lorsque le dispositif d'injection est alimenté par l'organe (26, 126, 226) de production d'énergie, ladite injection de dioxyde de carbone est mise en oeuvre avec un deuxième débit (D2), supérieur au premier débit.

3. Procédé de régulation selon la revendication 2, dans lequel
- l'installation comporte un outil (50) de prévision de la puissance (P) fournie ; et
- lorsque ladite puissance (P) fournie est dans le deuxième état intermédiaire, l'injection de dioxyde de carbone depuis le compartiment de stockage est mise en oeuvre avec un troisième débit (D3) variable au cours du temps entre les premier et deuxième débits, en fonction de prévisions de l'outil (50).

4. Installation (10, 110, 210) pour la séquestration géologique de dioxyde de carbone, ladite installation comprenant :
- une structure (20) ;
- un compartiment (22) de stockage de dioxyde de carbone à l'état liquide, reçu dans ladite structure ;
- un dispositif d'injection (24), apte à injecter du dioxyde de carbone dans un réservoir géologique sous-marin, depuis ledit compartiment de stockage ;
- un organe (26, 126, 226) de production d'énergie, apte à alimenter ledit dispositif d'injection ; et
- un organe (28, 128, 228) de stockage d'énergie reçu dans ladite structure, ledit organe de stockage étant également apte à alimenter le dispositif d'injection ;
l'installation étant munie de moyens de mise en oeuvre d'un procédé de gestion selon l'une des revendications précédentes, de sorte à assurer une injection continue de dioxyde de carbone dans le réservoir géologique sous-marin depuis le compartiment de stockage.

5. Installation (10) selon la revendication 4, dans laquelle l'organe (28) de stockage d'énergie comprend un dispositif (30, 32) de stockage d'énergie hydraulique.

6. Installation (110) selon la revendication 4 ou la revendication 5, dans laquelle l'organe (128) de stockage d'énergie comprend un dispositif (130) de stockage de dioxyde de carbone sous pression.

7. Installation (210) selon l'une des revendications 4 à 6, dans laquelle l'organe (228) de stockage d'énergie comprend une batterie (46) de stockage électrique.

8. Installation (10) selon l'une des revendications 4 à 7, dans laquelle l'organe (26) de production d'énergie est reçu sur la structure (20).

9. Installation (110, 210) selon l'une des revendications 4 à 7, dans laquelle l'organe (126, 226) de production d'énergie est externe à la structure (20).

10. Installation selon l'une des revendications 4 à 7, dans laquelle l'organe (26, 126, 226) de production d'énergie est alimenté par une source d'énergie renouvelable, préférentiellement choisie parmi l'énergie éolienne, l'énergie solaire, l'énergie maréthermique, l'énergie marémotrice et l'énergie provenant de la géothermie.

## Patentansprüche

1. Verfahren zum Regeln einer Anlage (10, 110, 210) für die geologische Sequestrierung von Kohlendioxid, wobei die Anlage umfasst:
- eine vorzugsweise schwimmende Struktur (20);
- eine Kammer (22) zum Speichern von Kohlendioxid in flüssigem Zustand, die in der Struktur aufgenommen ist;
- eine Injektionsvorrichtung (24), die dazu geeignet ist, Kohlendioxid aus der Speicherkammer in ein geologisches Unterwasserreservoir (12) zu injizieren;
- eine Energieerzeugungseinrichtung (26, 126, 226), die dazu geeignet ist, die Injektionsvorrichtung zu versorgen; und
- eine Energiespeichereinrichtung (28, 128, 228), die in der Struktur aufgenommen ist, wobei die Speichereinrichtung auch dazu geeignet ist, die Injektionsvorrichtung zu versorgen;
wobei das Verfahren **dadurch gekennzeichnet ist, dass**:
- die Energieerzeugungseinrichtung eine zeitlich variable Leistung (P) liefert, wobei die gelieferte Leistung einem ersten (P1) und einem zweiten (P2) definierten Leistungsschwellenwert zugeordnet ist, wobei der zweite Schwellenwert größer als oder gleich dem ersten Schwellenwert ist; wobei die gelieferte Leistung zwischen einem ersten niedrigen Zustand, der unterhalb des ersten Schwellenwerts (P1) liegt, einem zweiten mittleren Zustand, der zwischen dem ersten und dem zweiten Schwellenwert liegt, und einem dritten hohen Zustand, der oberhalb des zweiten Schwellenwerts (P2) liegt, variiert;
- wenn sich die gelieferte Leistung in dem ersten niedrigen Zustand befindet, die Injektionsvorrichtung (24) durch die Energiespeichereinrichtung (28, 128, 228) versorgt wird; und wenn sich die gelieferte Leistung in dem dritten hohen Zustand befindet, die Injektionsvorrichtung durch die Energieerzeugungseinrichtung (26, 126, 226) versorgt wird und die Energieerzeugungseinrichtung parallel die Energiespeichereinrichtung (28, 128, 228) versorgt;
sodass eine kontinuierliche Injektion von Kohlendioxid aus der Speicherkammer in das geologische Unterwasserreservoir gewährleistet ist.

2. Regelungsverfahren nach Anspruch 1, wobei, wenn die Injektionsvorrichtung (24) durch die Energiespeichereinrichtung (28, 128, 228) versorgt wird, die Injektion von Kohlendioxid aus der Speicherkammer mit einer ersten Durchflussrate (D1) durchgeführt wird; und wenn die Injektionsvorrichtung durch die Energieerzeugungseinrichtung (26, 126, 226) versorgt wird, die Injektion von Kohlendioxid mit einer zweiten Durchflussrate (D2) durchgeführt wird, die größer als die erste Durchflussrate ist.

3. Regelungsverfahren nach Anspruch 2, wobei
- die Anlage ein Instrument (50) zum Vorhersagen der gelieferten Leistung (P) umfasst; und
- wenn sich die gelieferte Leistung (P) in dem zweiten mittleren Zustand befindet, die Injektion von Kohlendioxid aus der Speicherkammer mit einer dritten Durchflussrate (D3) durchgeführt wird, die in dem Laufe der Zeit zwischen der ersten und der zweiten Durchflussrate in Abhängigkeit von Vorhersagen des Instruments (50) variiert.

4. Anlage (10, 110, 210) für die geologische Sequestrierung von Kohlendioxid, wobei die Anlage umfasst:
- eine Struktur (20);
- eine Kammer (22) zum Speichern von Kohlendioxid in flüssigem Zustand, die in der Struktur aufgenommen ist;
- eine Injektionsvorrichtung (24), die dazu geeignet ist, Kohlendioxid aus der Speicherkammer in ein geologisches Unterwasserreservoir zu injizieren;
- eine Energieerzeugungseinrichtung (26, 126, 226), die dazu geeignet ist, die Injektionsvorrichtung zu versorgen; und
- eine Energiespeichereinrichtung (28, 128, 228), die in der Struktur aufgenommen ist, wobei die Speichereinrichtung auch dazu geeignet ist, die Injektionsvorrichtung zu versorgen;
wobei die Anlage mit Mitteln zum Durchführen eines Steuerungsverfahrens nach einem der vorstehenden Ansprüche ausgestattet ist, um eine kontinuierliche Injektion von Kohlendioxid aus der Speicherkammer in das geologische Unterwasserreservoir zu gewährleisten.

5. Anlage (10) nach Anspruch 4, wobei die Energiespeichereinrichtung (28) eine Vorrichtung (30, 32) zum Speichern von Wasserenergie umfasst.

6. Anlage (110) nach Anspruch 4 oder 5, wobei die Energiespeichereinrichtung (128) eine Vorrichtung (130) zum Speichern von Kohlendioxid unter Druck umfasst.

7. Anlage (210) nach einem der Ansprüche 4 bis 6, wobei die Energiespeichereinrichtung (228) eine elektrische Speicherbatterie (46) umfasst.

8. Anlage (10) nach einem der Ansprüche 4 bis 7, wobei die Energieerzeugungseinrichtung (26) auf der Struktur (20) aufgenommen ist.

9. Anlage (110, 210) nach einem der Ansprüche 4 bis 7, wobei sich die Energieerzeugungseinrichtung (126, 226) außerhalb der Struktur (20) befindet.

10. Anlage nach einem der Ansprüche 4 bis 7, wobei die Energieerzeugungseinrichtung (26, 126, 226) durch eine erneuerbare Energiequelle versorgt wird, die vorzugsweise ausgewählt ist aus Windenergie, Sonnenenergie, Meereswärmeenergie, Gezeitenenergie und Energie aus Geothermie.

## Claims

1. A method for regulating an installation (10, 110, 210) for the geological sequestration of carbon dioxide, said installation comprising:
- a structure (20), preferentially a floating structure;
- a liquid carbon dioxide storage compartment (22), received in said structure;
- an injection device (24), able to inject carbon dioxide into a submarine geological reservoir (12), from said storage compartment;
- an energy production member (26, 126, 226), able to power said injection device; and
- an energy storage member (28, 128, 228), received in said structure, said storage member also being able to power the injection device;
the method being **characterized in that:**
- the energy production member supplies a time-variable power (P), said power supplied being associated with a first (P1) and a second (P2) defined power threshold, the second threshold being greater than or equal to the first threshold; the power supplied varying between a first weak state, below the first threshold (P1); a second intermediate state, between the first and second thresholds; and a third high state, greater than the second threshold (P2);
- when the power supplied is in the first low state, the injection device (24) is powered by the energy storage member (28, 128, 228); and when said power supplied is in the third high state, the injection device is powered by the energy production member (26, 126, 226) and said energy production device powers the storage member (28, 128, 228) in parallel;
so as to ensure a continuous injection of carbon dioxide into the submarine geological reservoir from the storage compartment.

2. The regulating method according to claim 1, wherein, when the injection device (24) is powered by the energy storage member (28, 128, 228), the injection of carbon dioxide from the storage compartment is implemented at a first flow rate (D1); and when the injection device is powered by the energy production member (26, 126, 226), said injection of carbon dioxide is implemented at a second flow rate (D2), greater than the first flow rate.

3. The regulating method according to claim 2, wherein
- the installation comprises a tool (50) for forecasting the power (P) supplied; and
- when said power (P) supplied is in the second intermediate state, the injection of carbon dioxide from the storage compartment is implemented at a third flow rate (D3) which is variable over time between the first and second flow rates, depending on the forecasts of the tool (50).

4. An installation (10, 110, 210) for the geological sequestration of carbon dioxide, said installation comprising:
- a structure (20);
- a liquid carbon dioxide storage compartment (22), received in said structure;
- an injection device (24), able to inject carbon dioxide into a submarine geological reservoir, from said storage compartment;
- an energy production member (26, 126, 226), able to power said injection device; and
- an energy storage member (28, 128, 228), received in said structure, said storage member also being able to power the injection device;
the installation being provided with means of implementing a management method according to any of the preceding claims, so as to ensure a continuous injection of carbon dioxide into the submarine geological reservoir from the storage compartment.

5. The installation (10) according to claim 4, wherein the energy storage member (28) comprises a hydraulic energy storage device (30, 32).

6. The installation (110) according to claim 4 or claim 5, wherein the energy storage member (128) comprises a device (130) for storing pressurized carbon dioxide.

7. The installation (210) according to one of claims 4 to 6, wherein the energy storage member (228) comprises an electrical storage battery (46).

8. The installation (10) according to one of claims 4 to 7, wherein the energy production member (26) is received on the structure (20).

9. The installation (110, 210) according to one of claims 4 to 7, wherein the energy production member (126, 226) is external to the structure (20).

10. The installation according to one of claims 4 to 7, wherein the energy production member (26, 126, 226) is powered by a renewable energy source, preferentially chosen from wind, solar, ocean thermal, tidal, and geothermal energy.
